Europäisches Patentamt

European Patent Office

Office européen des brevets

(19)

(11) Veröffentlichungsnummer : **0 011 228**
**B1**

(12) **EUROPÄISCHE PATENTSCHRIFT**

(45) Veröffentlichungstag der Patentschrift :
22.09.82

(21) Anmeldenummer : 79104358.1

(22) Anmeldetag : 07.11.79

(51) Int. Cl.³ : **B 01 D 53/14,** B 01 D 53/34,
C 01 B 17/60

(54) Verfahren zur Entfernung unerwünschter gasförmiger Bestandteile aus heissen Abgasen.

(30) Priorität : 09.11.78 DE 2848721

(43) Veröffentlichungstag der Anmeldung :
28.05.80 (Patentblatt 80/11)

(45) Bekanntmachung des Hinweises auf die Patenterteilung : 22.09.82 Patentblatt 82/38

(84) Benannte Vertragsstaaten :
AT BE CH DE FR GB IT NL SE

(56) Entgegenhaltungen :
DE - C - 965 919
FR - A - 722 354
US - A - 3 023 836

(73) Patentinhaber : **Linde Aktiengesellschaft**
**Abraham-Lincoln-Strasse 21**
**D-6200 Wiesbaden (DE)**

(72) Erfinder : **Linde, Gerhard, Dr.**
**Eichleite 50**
**D-8022 Grünwald (DE)**
Erfinder : **Häussinger, Peter, Dr.**
**Am Brombeerschlag 26**
**D-8000 München 70 (DE)**
Erfinder : **Schliebener, Claus, Dr.**
**Hugo-Hoffmann-Strasse 36**
**D-8021 Strasslach (DE)**

(74) Vertreter : **Schaefer, Gerhard, Dr.**
**Linde Aktiengesellschaft Zentrale Patentabteilung**
**D-8023 Höllriegelskreuth (DE)**

EP 0 011 228 B1

Imprimerie Jouve, 18, rue St-Denis, 75001 Paris, France

Verfahren zur Entfernung unerwünschter gasförmiger Bestandteile aus heißen Abgasen

Die Erfindung betrifft ein Verfahren zur Entfernung unerwünschter gasförmiger Bestandteile aus bei der Verbrennung kohlenstoffhaltiger Brennstoffe anfallenden Abgasen durch Wäsche mit einem physikalisch wirkenden Absorptionsmittel unterhalb von 0 °C, wobei das Absorptionsmittel nach der Aufnahme der gasförmigen Bestandteile einer Regenerierung unterzogen und in die Wäsche zurückgegeben wird.

Das Problem der Entfernung unerwünschter gasförmiger Bestandteile aus Verbrennungsgasen gewinnt zunehmend an Aktualität. Insbesondere die schwefelhaltigen Bestandteile, die bei der Verbrennung fossiler Brennstoffe in Kohle oder Öl beheizten Kraftwerken in den Verbrennungsgasen auftreten, gelten als schädlich für die Umwelt und sind daher aus den Verbrennungsgasen zu entfernen, bevor diese als Abgas in die Atmosphäre entlassen werden.

Die Entfernung von Schwefeldioxid aus derartigen Verbrennungsgasen wurde bisher zumeist auf chemischem Wege durchgeführt, und zwar durch Wäsche mit Absorptionsmitteln, die als wirksame Bestandteile Alkali- oder Erdalkaliverbindungen enthielten. Gewöhnlich wurden in diesem Zusammenhang Erdalkalioxide oder -carbonate, beispielsweise Magnesiumoxid oder Calciumcarbonat, oder auch Alkalicarbonate, -hydrogencarbonate, -sulfite, -hydrogensulfite oder -thiosulfate, beispielsweise des Natriums, verwendet. Als Reaktionsprodukte ergaben sich dabei die entsprechenden schwefelhaltigen Salze, nämlich Sulfite, Hydrogensulfite und Sulfate. Diese chemischen Wäschen wurden meist bei relativ hohen Temperaturen durchgeführt, die nur unwesentlich oder gar nicht unter denjenigen Temperaturen lagen, mit denen die Verbrennungsgase selbst anfielen. Die Apparaturen zur Durchführung dieser Reinigungsverfahren waren somit einer ständigen und starken thermischen Belastung ausgesetzt und mußten aus den geeigneten hitzebeständigen Wirkstoffen gefertigt sein. Zudem wurden die schließlich abzublasenden, oft noch wasserdampfhaltigen Abgase bei relativ hohen Temperaturen in die Atmosphäre abgegeben, auch wenn ihnen ein Teil ihrer Wärmeenergie noch vorher, beispielsweise zur Erzeugung von Heißdampf oder zur Vorwärmung der Verbrennungsluft, entzogen wurde.

Es ist zwar aus DE-C-965 919 bekannt, speziell zur Entfernung von Schwefeldioxid aus Gasen, beispielsweise Röstgasen, das zu reinigende Gas einer Tieftemperaturwäsche, etwa mit Methanol bei − 80 °C, zu unterziehen, jedoch ist die dortige Offenbarung nicht auf die Behandlung heißer Verbrennungsgase abgestellt. Insbesondere kann dieser Druckschrift nichts darüber entnommen werden, wie die thermische Gesamtbilanz eines derartigen Verfahrens unter wirtschaftlichen Gesichtspunkten möglichst optimal gestaltet werden kann. So ist nichts über die Abkühlung heißer Verbrennungsgase auf Umgebungstemperatur, insbesondere in einem zweistufigen Verfahren ausgesagt, die zu reinigenden Gase liegen dort vielmehr bereits bei Umgebungstemperatur vor. Zur Deckung der Kälteverluste wird lediglich die Verwendung eines gesonderten Äthylenkältemittelkreislaufs vorgeschlagen, der in üblicher Weise ausgebildet ist. Eine unmittelbare Übertragung dieses Verfahrens auf die Reinigung heißer Verbrennungsabgase ist daher nicht naheliegend.

Weiter ist aus FR-A-722 354 ein Verfahren zum Trocknen nitroser Gase bekannt, bei dem der Wärmeinhalt des heißen Rohgases durch indirekten Wärmeaustausch mit Luft, die anschließend als Heizmittel weiterverwendet wird, auf eben diese Luft übertragen wird. Die Anwendung dieses Verfahrens auf das Verfahrengemäss DE-C-965 919 legt die Kühlung heißer Verbrennungsgase in einem zweistufigen Verfahren mittels der beanspruchten Kälteanlage jedoch nicht nahe.

Der vorliegenden Erfindung liegt die Aufgabe zugrunde, ein Verfahren der eingangs genannten Art bereitzustellen, das unter wirtschaftlichen Gesichtspunkten möglichst optimal gestaltet ist und die Umweltbelastung auf ein Minimum herabsetzt.

Diese Aufgabe wird gemäß der Erfindung durch die im kennzeichnenden Teil des Patentanspruchs 1 genannten Maßnahmen gelöst.

Die Erfindung beinhaltet im wesentlichen die Anwendung einer Tieftemperaturwäsche auf die Reinigung heißer Verbrennungsabgase und die optimale thermische Integrierung der verschiedenen Verfahrensschritte durch Koppelung der Ausnutzung der in den heißen Abgasen enthaltenen Hochtemperaturwärme mit der Deckung der bei der Tieftemperaturwäsche auftretenden Kälteverluste. Zudem werden die an sich bekannten günstigen Wirkungen einer mit einem physikalischen Waschmittel durchgeführten Tieftemperaturwäsche ausgenutzt, die darin bestehen, daß die benötigte Waschmittelmenge mit sinkenden Temperaturen aufgrund steigender Aufnahmefähigkeit des physikalischen Waschmittels für gasförmige Komponenten stark abnimmt. Eine solche physikalische Tieftemperaturwäsche erfordert demnach nur eine minimale Waschmittelmenge, verbunden mit minimalen Betriebskosten für die Umwälzung und Regenerierung des Waschmittels sowie für die Deckung der Kälteverluste. Die Hochtemperaturwärme der heißen Verbrennungsgase wird sinnvoll innerhalb des Gesamtverfahrens genutzt, einerseits zur Aufheizung der für den Verbrennungsprozeß benötigten Verbrennungsluft, die aus der Atmosphäre angesaugt wird, andererseits zum Betreiben der die Kälteverluste deckenden Absorptionskälteanlage. Der gesamte Temperaturbereich des Wärmeaustausches, der ja durch einen Temperaturgradienten der an ihm teilnehmenden Fluidströme gekennzeichnet ist, wird in einen oberen und einen unteren Temperaturbereich gegliedert, die unmittelbar aneinandergrenzen. Die heißen Abgase durchlaufen bei ihrer Abkühlung den gesamten Temperaturbereich, während die anzuwärmenden Gasströme jeweils nur entweder den oberen oder den unteren Temperaturbereich durchlaufen. Durch die, im allgemeinen gemeinsam durchgeführte, Anwärmung zweier Luftströme im oberen Temperaturbereich wird gleichzeitig das Problem gelöst, die Wärmebilanz in den entsprechenden Wärmeaustauschern auszugleichen. Die Anwärmung der Verbrennungsluft allein, im Sinne üblicher Verfahrensweisen liegend, würde zur Deckung dieser Wärmebilanz nicht ausreichen, da die Verbrennungsabgase aufgrund des Vorhandenseins relativ großer Mengen von Kohlendioxid und auch Wasserdampf eine größere spezifische Wärme aufweisen als die Verbrennungsluft. Je unausgeglichener die Wärmebilanz beim Wärmeaustausch ist, desto schlechter muß letztlich die Ausnutzung der thermischen Energie sein. Dieses Problem wird durch die erfindungsgemäße Maßnahme der zusätzlichen Anwärmung von Heizluft für die Absorptionskälteanlage in vorteilhafter Weise gelöst.

In Weiterbildung der Erfindung ist vorgesehen, daß im unteren Temperaturbereich des Wärmeaustausches als anzuwärmender Gasstrom das kalte, in der Wäsche gereinigte Abgas verwendet wird. Die Grenztemperatur zwischen unterem und oberem Temperaturbereich kann dabei zweckmäßig so gewählt werden, daß das nach Durchlaufen des Wärmeaustausches im unteren Temperaturbereich abzublasende Abgas eine Temperatur besitzt, die die Umgebungstemperatur nur unwesentlich überschreitet. Diese Grenztemperatur wird dabei über der Temperatur der aus der Umgebung angesaugten, gegebenenfalls komprimierten Luft liegen, da diese bei Eintritt in den oberen Temperaturbereich ja sofort anzuwärmen ist. Sollte der zusätzliche Luftstrom nach seiner Nutzung als Heizgas noch eine wesentlich über der Temperatur des gereinigten, angewärmten Abgases liegende Temperatur aufweisen, so kann er diesem zugemischt werden. Dabei ergibt sich infolge der Mengenverhältnisse einerseits eine relativ nahe bei der Temperatur des angewärmten Abgases liegende Mischtemperatur, die andererseits ausreicht, das mit Luft vermischte gereinigte Abgas ohne zusätzliches Gebläse durch Naturzug durch einen Kamin abzuleiten.

Die Absorptionskälteanlage soll in bekannter Weise mit einem Ammoniak-Wasser-Gemisch betrieben werden, wobei das als Kältemittel dienende Ammoniak zur Kühlung des regenerierten Absorptionsmittels sowie des vom Kopf der Waschsäule abströmenden gereinigten Abgases verwendet und dabei verdampft wird. Das Kältemittel wird also nicht nur zur Abkühlung des Absorptionsmittels verwendet, sondern, vorzugsweise in Parallelführung, auch dazu, die am kalten Ende der Wärmeaustauscher erforderlichen tiefen Temperaturen einzustellen.

Soll eine möglichst niedrige Waschtemperatur erzielt werden, so ist zur Deckung des Kältebedarfs der Wäsche zusätzlich ein Wärmepumpenkreislauf vorgesehen, der den an der Wäsche beteiligten Fluiden Wärme entzieht und an das Kältemittel der Absorptionskälteanlage überträgt. Insbesondere kann dabei so vorgegangen werden, daß die Absorptionskälteanlage mit einem Wasser-Ammoniak-Gemisch und der Wärmepumpenkreislauf mit Ammoniak betrieben wird. Die von der Absorptionskälteanlage erzeugte Kälte wird somit unter Verwendung desselben Kältemittels durch den Wärmepumpenkreislauf auf ein niedrigeres Temperaturniveau gebracht. Das gegen verdampfendes Ammoniak der Absorptionskälteanlage verflüssigte Ammoniak des Wärmepumpenkreislaufs wird nach Entspannung auch in diesem Falle zweckmäßig in Wärmeaustausch mit abzukühlendem, der Wäsche zuzuführendem Absorptionsmittel sowie vom Kopf der Wäsche abzuziehendem, gereinigtem Abgas verdampft. Bei Verwendung von Ammoniak im Wärmepumpenkreislauf ist es zur Erzielung möglichst niedriger Waschtemperaturen angebracht, dieses bei unteratmosphärischem Druck zu verdampfen, da sonst eine wesentlich unter − 30 °C liegende Absorptionsmitteltemperatur nicht erreichbar ist.

Es ist vielfach zweckmäßig, den zur Abkühlung des Abgases dienenden Wärmeaustausch in umschaltbaren Regeneratoren stattfinden zu lassen. Dabei kann beispielsweise so vorgegangen werden, daß für den oberen sowie den daran anschließenden unteren Temperaturbereich des Wärmeaustausches jeweils gesonderte Regeneratoren vorgesehen sind. Diese Verfahrensweise kann insbesondere dann zum Einsatz kommen, wenn im oberen und unteren Temperaturbereich unterschiedliche Gasströme erwärmt werden. Sie ermöglicht außerdem erhöhte Flexibilität in der Gestaltung des Regeneratorteils. So können in den beiden Temperaturbereichen unterschiedliche Anzahlen von Regeneratoren zum Einsatz kommen, deren Konstruktion und Schaltung jeweils an die besonderen Anforderungen angepaßt sind.

Im oberen Temperaturbereich des Wärmeaustausches wird es im allgemeinen weniger auf die Erzielung eines optimalen Austauschwirkungsgrades ankommen, da der Hauptteil der höhersiedenden Bestandteile, insbesondere das Wasser, erst im unteren Temperaturbereich auskondensiert, und somit zum Zwecke der Erzielung einer vollständigen Rücksublimation erst dort auf die Einhaltung möglichst geringer Temperaturdifferenzen Wert zu legen ist. An die Gleichmäßigkeit der Strömungsgeschwindigkeit über dem Querschnitt einer Regeneratorschüttung brauchen demnach im oberen Temperaturbereich weniger hohe Anforderungen gestellt zu werden als im unteren Temperaturbereich.

Im oberen Temperaturbereich kann daher mit vergleichsweise größeren Schüttungsdurchmessern (bezogen auf die Schüttungshöhe) gearbeitet werden, woraus eine Vergrößerung des Regeneratorquerschnitts und eine Verkleinerung der Regeneratoranzahl resultiert.

Eine bevorzugte Möglichkeit für den Regeneratoraufbau besteht darin, daß jeder dem oberen Temperaturbereich zugeordnete Regenerator zwei in axialer Richtung hintereinander angeordnete, durch eine Trennwand voneinander getrennte Schüttungen aufweist. Ein derartiger Regenerator wird dann so betrieben, daß die eine Schüttung jeweils von dem abzukühlenden Abgas und die andere Schüttung gleichzeitig von der anzuwärmenden Luft durchströmt wird, wobei die Schüttungen periodisch zwischen dem Abgas und der Luft umgeschaltet werden. In einem einzigen Regeneratorgehäuse sind somit beide Schaltphasen funktionell vereint, so daß bei einer Abnahme der anfallenden Abgasmenge ein Regenerator nach dem anderen abgeschaltet werden kann und bei einer entsprechend gering bemessenen Abgasmenge schließlich ein einziger Regenerator ausreicht, der die geforderte Funktion jedoch voll erfüllt. Ebenso gut ist es möglich, die gesamte Anlage von vornherein darauf abzustellen, daß im oberen Temperaturbereich des Wärmeaustausches lediglich mit einem einzigen Regenerator der beschriebenen Konstruktion und Betriebsweise gearbeitet wird.

Für den unteren Temperaturbereich können Paare von jeweils zwei axial hintereinander angeordnete Schüttungen aufweisenden, periodisch zwischen den abzukühlenden und den anzuwärmenden Gasströmen umzuschaltenden Regeneratoren verwendet werden, wobei die beiden Schüttungen eines jeden Regenerators in jeweils entgegengesetzten Richtungen entweder von der Mitte her zu den Enden hin oder umgekehrt durchströmt werden. Somit liegen in jedem Regeneratorgehäuse zwei strömungsmäßig parallel geschaltete Schüttungen vor. Der Druckverlust bezüglich der gesamten einen Regenerator durchströmenden Gasmenge ist damit auf die Hälfte reduziert. Bezüglich der Strömungsrichtung kann so vorgegangen werden, daß der mit dem im oberen Temperaturbereich vorgekühlten Abgas beaufschlagte Regenerator eines jeden Paares von der Mitte zu den Enden hin und der andere, mit dem anzuwärmenden Gasstrom beaufschlagte Regenerator von den Enden zur Mitte hin durchströmt wird. Da die warmen bzw. heißen Partien des Regenerators sich somit in dessen Mitte befinden, kann die Wärmeabstrahlung nach außen in günstiger Weise gering gehalten werden.

Die geschilderte funktionale und konstruktive Trennung der den beiden Temperaturbereichen des Wärmeaustausches zugeordneten Regeneratoren hat den zusätzlichen Vorteil, daß die Versorgung des der Verbrennung der kohlenstoffhaltigen Brennstoffe dienenden Kraftwerkes mit erhitzter Verbrennungsluft von der durch die physikalische Tieftemperaturwäsche bewirkten Abgasreinigung im Bedarfsfall abgekoppelt werden kann. Dies kann beispielsweise dann der Fall sein, wenn Störungen im Reinigungsteil auftreten, die ein vorübergehendes Abschalten dieses Teiles notwendig machen. Der im oberen Temperaturbereich erfolgende Wärmeaustausch zwischen den heißen Abgasen und der anzuwärmenden Verbrennungsluft kann dann ohne weiteres separat durchgeführt werden, so daß keine Beeinträchtigung des Kraftwerksbetriebes durch die Störung im Reinigungsteil auftritt.

Das oben geschilderte Verfahren unter Anwendung der Regeneratoren kann insbesondere zur Entfernung von Schwefeldioxid aus feuchten, Schwefeltrioxid enthaltenden Rauchgasen herangezogen werden. Es ist dann zweckmäßig, die bei der Vorkühlung im oberen Temperaturbereich aus Wasser und Schwefeltrioxid gebildete Schwefelsäure vor Eintritt des vorgekühlten Rauchgases in den unteren Temperaturbereich vom Rauchgas abzutrennen. Dabei handelt es sich im allgemeinen nur um geringe Schwefelsäuremengen, die sich als Oberflächenschicht auf den Füllkörpern der Regeneratorschüttung niederschlagen. Diese Schwefelsäuremengen werden dann von der anzuwärmenden Luft problemlos weggeführt. Es ist weiterhin zweckmäßig, die abzukühlenden und zu reinigenden Rauchgase nicht bereits vor Eintritt in den oberen, sondern erst vor Eintritt in den unteren Temperaturbereich des Wärmetausches zu verdichten, da die Verdichtung bei niedrigen Temperaturen weniger Energie erfordert. Die Verdichtung an sich ist von Vorteil, da sie eine Verkleinerung der Regeneratoren ermöglicht.

Die Anwendung von Regeneratoren im Zusammenhang mit der Schwefeldioxidentfernung aus anderen Gasen, wie in speziellen Ausführungsformen oben geschildert, ist an sich bereits aus der DE-A-965 919 bekannt. Allerdings ist der Regeneratorteil dort anders ausgebildet als im vorliegenden Fall. Wie bereits erwähnt, enthalten Rauchgase im allgemeinen korrosive Bestandteile, wie Schwefeltrioxid, das in Verbindung mit Wasserdampf beim Abkühlen Schwefelsäure bildet. Da es möglich ist, korrosionsbeständige Regeneratorschüttungen sowie -auskleidungen einzusetzen, kann auf die Verwendung hochlegierter Stähle für die Wärmeaustauscher oder den Zusatz von Korrosionsinhibitoren verzichtet werden.

Bezüglich der Wäsche zur Schwefeldioxidentfernung wird es als besonders vorteilhaft angesehen, als Absorptionsmittel Dimethylformamid zu verwenden. Dieses wird gegenüber Methanol bevorzugt, da es einen wesentlich niedrigeren Dampfdruck aufweist und folglich die Verluste dampfförmig vom Kopf der Wäsche abströmenden Absorptionsmittels sowie die Verdampfungsverluste in der Warmregenerierung erheblich reduziert werden können.

Rauchgase, die durch Verbrennung kohlenstoffhaltiger Brennstoffe mit Luft entstehen, enthalten neben Stickstoff und Wasserdampf im allgemeinen erhebliche Mengen an Kohlendioxid. Diese gelangen auch bei den hier angewendeten, bezüglich der Celsiusskala negativen Waschtemperaturen und gemäßigten Drücken nahezu vollständig in die Waschsäule. Aufgrund der besonderen Selektivität des Dimethylformamids für Schwefeldioxid wird nur ein geringer Anteil des Kohlendioxids mitgelöst. Es erweist sich dann als zweckmäßig, die Regenerierung des Absorptionsmittels in zwei Stufen erfolgen zu lassen, wobei in der ersten Stufe mitgelöstes Kohlendioxid und in der zweiten Stufe das Schwefeldioxid ausgetrieben wird. Dabei kann so vorgegangen werden, daß das Kohlendioxid mit Hilfe von Strippgas und das Schwefeldioxid bei unteratmosphärischem Druck und unter Wärmezufuhr ausgetrieben wird. Als Strippgas kann Stickstoff verwendet werden. Insgesamt gesehen erweist sich die Anwendung von Dimethylformamid als Absorptionsmittel anstelle von Methanol demnach nicht nur wegen der geringeren Verdampfungsverluste, sondern auch wegen der geringeren Belastung der Regenerierung durch mitgelöstes Kohlendioxid als vorteilhaft.

Da Schwefeltrioxid und Wasserdampf in den Regeneratoren nur bis auf unvermeidliche Restkonzentrationen entfernt werden können, besteht im weiteren Verfahrensablauf immer wieder die Gefahr der Schwefelsäurebildung, was wegen der Korrosionsgefahr soweit wie möglich verhindert werden muß. Eine zusätzliche Quelle der Schwefelsäurebildung ist die Anwesenheit von Restkonzentrationen an Stickstoffdioxid im Rauchgas, die durch Oxidation von Schwefeldioxid ebenfalls zur Bildung von Schwefeltrioxid führen. Infolgedessen ist es zweckmäßig, die aus restlichem oder durch Oxidation von Schwefeldioxid entstandenem Schwefeltrioxid und Restfeuchtigkeit gebildete Schwefelsäure aus dem regenerierten Absorptionsmittel zu entfernen. Die Entfernung der Schwefelsäure aus dem noch beladenen Absorptionsmittel ist demgegenüber weniger zweckmäßig, da Schwefeltrioxid auf oxidativem Wege aus Schwefeldioxid so lange nachgebildet werden kann, bis letzteres aus dem beladenen Waschmittel entfernt ist, was erst in der zweiten Stufe der Regenerierung geschieht.

Als eine Möglichkeit zur Schwefelsäureentfernung ist die Neutralisation vorgesehen. Diese kann mit allen üblichen Neutralisationsmitteln vorgenommen werden, vorzugsweise mit Ammoniak oder Kalziumoxid. Das bei der Neutralisation mit Ammoniak entstehende Ammoniumsulfat kann abfiltriert werden. Das Kalziumoxid wird vorzugsweise in granulierter Form und im Überschuß verwendet. Weitere verwendbare Neutralisationsmittel sind z.B. Kalilauge und Natronlauge, die in wäßriger oder auch in methanolischer oder äthanolischer Lösung zur Anwendung kommen können.

Es ist aber auch möglich, das Dimethylformamid destillativ von der Schwefelsäure abzutrennen, wobei letztere im Sumpf der Destillationssäule aufkonzentriert und ersteres gasförmig vom Kopf der Säule abgezogen wird. Restliches Dimethylformamid kann aus der destillativ aufkonzentrierten Schwefelsäure durch Extraktion mit einem mit Schwefelsäure nicht mischbaren Lösungsmittel entfernt werden. Dabei wird zweckmäßig mit einem polaren organischen Lösungsmittel, beispielsweise Chloroform, Toluol oder Benzol, extrahiert. Reicht die Konzentration der Schwefelsäure zur Bildung zweier Phasen nicht aus, so kann die Extraktion in Anwesenheit von Wasser durchgeführt werden. Die Schwefelsäure sammelt sich dann in der wäßrigen Phase, während das Dimethylformamid großentiels von der organischen Phase aufgenommen wird.

Als weitere Alternative für die Schwefelsäureentfernung kommt der Ionenaustausch in Frage. Dabei wird ein basischer Ionenaustauscher in der OH-Form verwendet, der das Sulfation aufnimmt und anschließend mit einer Lösung von Kalilauge in Dimethylformamid oder in Wasser regeneriert werden kann.

Weiterhin kann die Schwefelsäure auch adsorptiv aus dem regenerierten Absorptionsmittel entfernt werden. Als Adsorptionsmittel kommen beispielsweise Aktivkohle oder Aluminiumoxid in Frage.

Das bei dem Verfahren zur Schwefeldioxidentfernung aus Rauchgasen gemäß der Erfindung schließlich aus dem Adsorptionsmittel ausgetriebene Schwefeldioxid kann, gegebenenfalls nach Abtrennung weiterer mit ausgetriebener gasförmiger Komponenten, auf einem der üblichen Wege verflüssigt und dann als konzentriertes Produkt der weiteren Verwendung zugeführt werden. Das ausgetriebene Schwefeldioxid kann aber auch mit Sauerstoff, beispielsweise Luftsauerstoff, zu Schwefeltrioxid oxidiert und in Wasser oder verdünnter Schwefelsäure gelöst werden, so daß als Produkt Schwefelsäure mittlerer Konzentration anfällt.

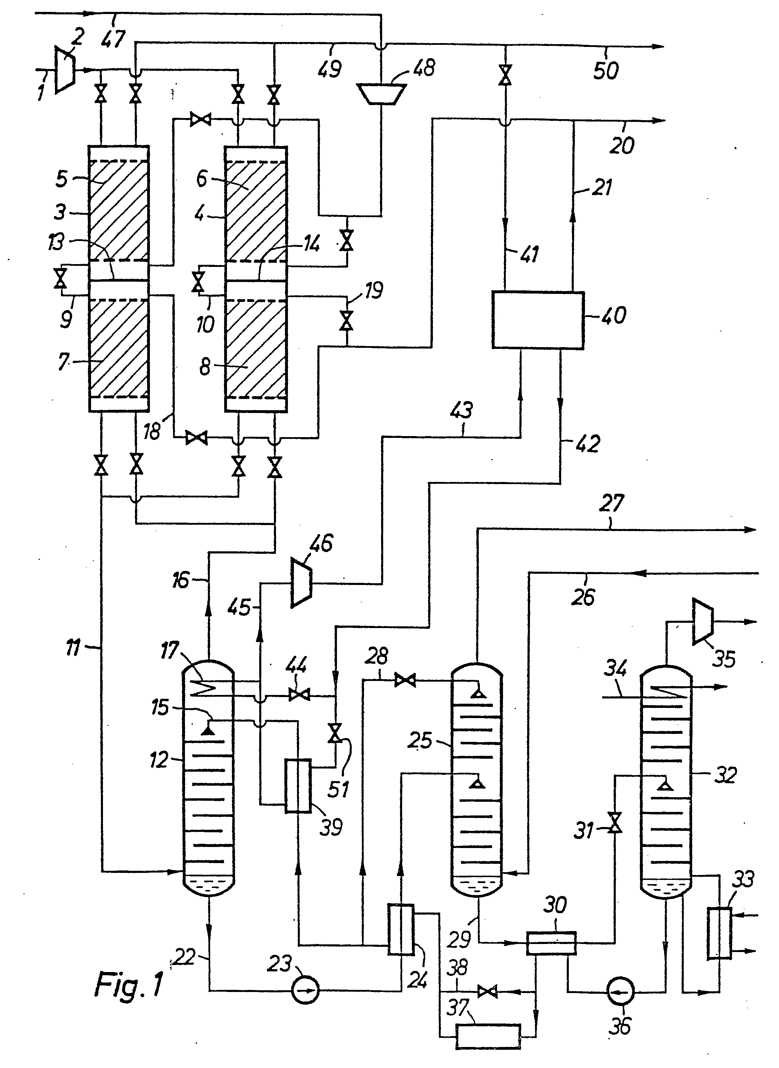

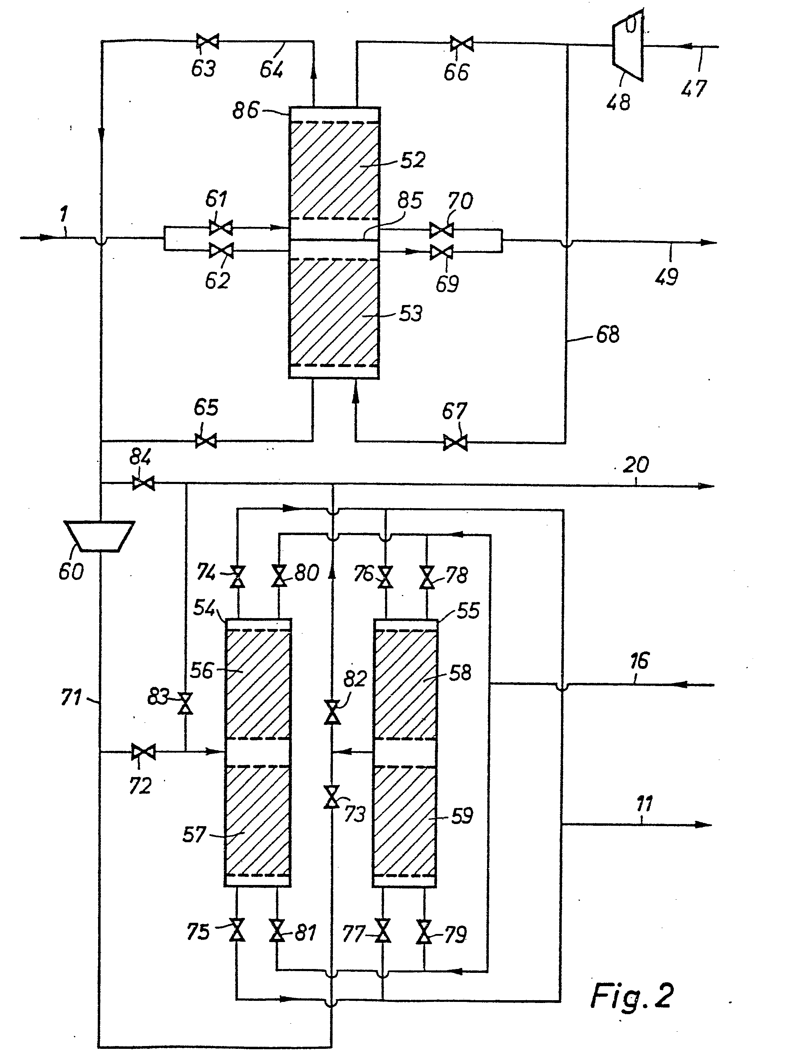

Die Figur 1 zeigt in schematischer Weise ein Ausführungsbeispiel des Gesamtverfahrens gemäß der Erfindung. Die Figur 2 zeigt schematisch eine besondere Ausführungsform des Regeneratorteils.

Es soll ein Rauchgas, das zu ca. 75 Vol.-% aus Stickstoff und Argon, zu ca. 14 Vol.-% aus Kohlendioxid, zu ca 7 Vol.-% aus Wasserdampf sowie zu ca. 4 Vol.-% aus Sauerstoff besteht und daneben 0,06 Vol.-% Schwefeldioxid sowie 0,003 Vol.-% Schwefeltrioxid enthält, möglichst weitgehend von den beiden Schwefeloxiden befreit werden. 15 000 Nm$^3$/h dieses Rauchgases werden über eine Leitung 1 einem Kompressor 2 zugeleitet, dort auf einen Druck von 1,3 bar verdichtet und mit einer Temperatur von 310 °C in einen der beiden Regeneratoren 3,4 eingeleitet.

Jeder dieser beiden Regeneratoren 3, 4 ist mit zwei übereinander angeordneten Füllkörperschüttungen 5, 7 sowie 6, 8 ausgestattet. Die Schüttungen können aus Steinen, Füllkörpern aus keramischem oder anderen gebräuchlichen Materialien bestehen, die vor allem gegen die korrodierenden Einflüsse der Schwefelsäure resistent sein müssen. Beide Schüttungen sind jeweils durch geschlossene Zwischenböden 13, 14 voneinander getrennt. Absperrbare Leitungen 9, 10 dienen der Verbindung der beiden Schüttungsräume.

Das Rauchgas durchströmt einen der beiden Regeneratoren, kühlt sich in der jeweils ersten Schüttung 5 bzw. 6 auf 48 °C ab, gelangt über die jeweilige Verbindungsleitung 9 bzw. 10 in die zweite Schüttung 7 bzw. 8, wo es sich weiter auf − 50 °C abkühlt, und wird schließlich über eine Leitung 11 aus dem jeweiligen Regenerator abgezogen. Die Zusammensetzung des Rauchgases hat sich dabei im Falle des vorliegenden Ausführungsbeispieles nur insoweit geändert, als der mitgeführte Wasserdampfgehalt nur mehr 480 g/h beträgt. Der ursprünglich vorhandene Wasserdampf wird demnach nahezu vollständig in den Regeneratorschüttungen niedergeschlagen.

13 952 Nm³/h nahezu vollständig getrockneten Rauchgases gelangen somit durch Leitung 11 in den unteren Teil einer Waschäule 12, die bei einem Druck von 1,2 bar betrieben wird. Im oberen Teil dieser Waschsäule wird über eine Leitung 15 regeneriertes flüssiges Dimethylformamid mit einer Temperatur von ca. − 50 °C als Absorptionsmittel zugeführt. Dieses wäscht aus dem Rauchgas nahezu das gesamte darin enthaltene Schwefeldioxid aus. Dabei werden geringe Anteile an Kohlendioxid mitgelöst. Das so gereinigte, in einem Kopfkühler 17 auf − 53 °C gekühlte Rauchgas verläßt die Waschsäule über eine Leitung 16. Es enthält nur mehr maximal 1 Nm³/h Schwefeldioxid, d.h. maximal ca. 70 Vol. ppm. Anteile an Schwefeltrioxid sind nicht mehr nachweisbar, der Kohlendioxidgehalt ist um 18,4 Nm³/h gesunken.

Das gereinigte, kalte Rauchgas strömt durch Leitung 16 der zweiten, d.h. unteren Schüttung des jeweils anderen der beiden Regeneratoren 3, 4 zu, nimmt das dort abgeschiedene Wasser auf und verläßt den Regenerator über Leitung 18 bzw. 19. Nach Zuspeisung von 3 061 Nm³/h Luft mit einer Temperatur von 180 °C durch Leitung 21 wird über Leitung 20 ein auf einer Temperatur von ca. 67 °C befindliches Gasgemisch abgezogen, das hauptsächlich aus Stickstoff, Kohlendioxid, Sauerstoff und Wasserdampf besteht und nur mehr ca. 60 Vol. ppm Schwefeldioxid enthält. Dieses Gasgemisch wird über den Kamin in die Atmosphäre abgegeben.

Vom Sumpf der Waschsäule 12 wird währenddessen das mit Schwefeldioxid und Kohlendioxid beladene flüssige Absorptionsmittel abgezogen. 2,5 t/h dieses beladenen Absorptionsmittels gelangen über eine Leitung 22 und eine Flüssigkeitspumpe 23 in einen Wärmeaustauscher 24, werden dort auf eine Temperatur von ca. 20 °C erwärmt und anschließend in eine Strippsäule 25 eingegeben. Diese arbeitet bei einem Druck von 1,1 bar und dient zum Austreiben des Kohlendioxids mit Hilfe von als Strippgas über eine Leitung 26 zugeführtem Stickstoff. Die Menge dieses gasförmigen Stickstoffs beträgt 200 Nm³/h. Er verläßt die Strippsäule über Kopf durch Leitung 27 und führt dabei 17 Nm³/h Kohlendioxid mit. Über eine Leitung 28 können 0,6 t/h regenerierten Absorptionsmittels auf den Kopf der Strippsäule 25 aufgegeben werden, um in die Dampfphase übergegangenes Schwefeldioxid zurückzuhalten. Das nunmehr bis auf einen Restgehalt von 1,4 Nm³/h vom Kohlendioxid befreite Absorptionsmittel wird über eine Leitung 29 vom Sumpf der Strippsäule 25 abgezogen, in einem Wärmeaustauscher 30 gegen heißes, regeneriertes Absorptionsmittel auf ca. 65 °C erwärmt, in einem Drosselventil 31 entspannt und in eine Regeneriersäule 32 eingeführt. Diese ist mit einer Sumpfheizung 33 und einem Kopfkühler 34 versehen und arbeitet bei einem unteratmosphärischem Druck von 0,1 bar. Das ausgetriebene Schwefeldioxid, insgesamt 8 Nm³/h wird zusammen mit dem ebenfalls ausgetriebenen restlichen Kohlendioxid, insgesamt 1,4 Nm³/h, über Kopf der Regeneriersäule 32 abgezogen und mit einem Kompressor 35 rückverdichtet. Die Sumpfheizung 33 kann mit kondensierendem Wasserdampf, der Kopfkühler 34 mit Kühlwasser betrieben werden. Im Sumpf der Regeneriersäule herrscht eine Temperatur von 70 °C, das abgezogene Gasgemisch hat eine Temperatur von 25 °C.

Die Durchführung der Regenerierung bei einem unteratmosphärischen Druck von 0,1 bar bringt den Vorteil mit sich, daß die Hydrolyse des Dimethylformamids nahezu vollständig unterdrückt wird. Die Gefahr der Hydrolyse muß berücksichtigt werden, da geringe Mengen durch Schwefelsäure angesäuerten Wassers in die Regeneriersäule mit eingeführt werden können und die Hydrolyse des Dimethylformamids in saurer wäßriger Lösung besonders stark auftritt. Diese Erscheinung ist allerdings stark temperaturabhängig im Sinne einer Abschwächung mit sinkender Temperatur. Da die Regenerierung andererseits nicht allzuweit unterhalb der Siedetemperatur des Absorptionsmittels durchgeführt werden sollte, diese bei Normaldruck im Falle des Dimethylformamids jedoch 153 °C beträgt, kann durch entsprechende Senkung des Regenerierdruckes und damit der Siedetemperatur sowohl die Forderung der Siedepunktsnähe erfüllt als auch die Hydrolyse nahezu vollständig unterdrückt werden.

Vom Sumpf der Regeneriersäule 32 werden 3,1 t/h heißen, vollständig regenerierten Absorptionsmittels abgezogen, mittels einer Flüssigkeitspumpe 36 auf einen Druck von ca. 1,3 bar gefördert, im Wärmeaustauscher 30 bis auf ca. 25 °C abgekühlt und gegebenenfalls einer Vorrichtung 37 zur Entfernung von etwa gebildeter Schwefelsäure zugeführt. Diese Vorrichtung kann auch mit Hilfe einer Parallelleitung 38 umgangen werden. Nach weiterer Abkühlung auf ca. − 32 °C im Wärmeaustauscher 24 und Abzweigung von 0,6 t/h für die Strippsäule 25 benötigten Absorptionsmittels über Leitung 28 werden die verbleibenden 2,5 t/h des regenerierten Absorptionsmittels nach nochmaliger Abkühlung in einem Wärmeaustauscher 39 schließlich mit einer Temperatur von ca. − 50 °C in den oberen Teil der Waschsäule 12 eingeführt.

Die für die letzte Abkühlung des regenerierten Absorptionsmittels im Wärmeaustauscher 39 sowie für die Kühlung des vom Kopf der Waschsäule 12 abgezogenen gereinigten Rauchgases benötigte Kälte wird durch eine Absorptionskälteanlage 40 zur Verfügung gestellt. Diese wird auf übliche Weise mit einem Ammoniak-Wasser-Gemisch betrieben, wobei das Ammonial als Kältemittel dient. Es soll vorzugsweise eine einstufige Absorptionskälteanlage verwendet werden. Die Positionsnummer 40 beinhaltet somit die beiden für das Lösungsmittel, d.h. Wasser, sowie das Kältemittel, nämlich Ammoniak, bestimmten Kreisläufe, die vom Absorber zur Aufnahme des verdampften Ammoniaks bis zum Austreiber bzw. Rektifikator gemeinsam durchlaufen werden, einschließlich des Ammoniak-Verflüssigers und des Ammoniak-Verdampfers, in dem das durch Leitung 43 heran und durch Leitung 42 abgeführte Ammoniak des Wärmepumpenkreislaufs verflüssigt wird, sowie des Ammoniak-Austreibers, der mit dem durch Leitung 41 heran- und durch Leitung 21 abgeführten Heißluftstrom beheizt wird.

Über Leitung 42 wird somit verflüssigtes Ammoniak, einer Menge von 140 Nm³/h dampfförmigen Ammoniaks entsprechend, herangeführt, in zwei Teilströme aufgeteilt, in Drosselventilen 51, 44 auf einen unteratmosphärischen Druck von 0,35 bar entspannt und anschließend in Wärmeaustauschern 39 gegen abzukühlendes regeneriertes Absorptionsmittel sowie im Kopfkühler 17 gegen abzukühlendes gereinigtes Rauchgas verdampft, in einer Leitung 45 wiedervereinigt, in einem Kompressor 46 auf einen Druck von ca. 1 bar rückverdichtet und durch Leitung 43 zum Verdampfer der Absorptionskälteanlage 40 zurückgeführt. Die Beheizung des Austreibers der Absorptionskälteanlage 40 erfolgt mit heißer Luft. Diese wird zu 3 061 Nm³/h mit einer Temperatur von 300 °C über Leitung 41 herangeführt und nach Abkühlung·auf 190 °C über Leitung 21 wieder abgeführt. Die dem Austreiber zugeführte Wärmemenge beträgt demnach ca. 104 000 kcal/h, die an die Wäsche abgegebene Kältemenge ca. 35 000 kcal/h.

Die zur Beheizung der Absorptionskälteanlage 40 dienende Luftmenge wird zusammen mit der für den Verbrennungsprozeß benötigten Verbrennungsluft durch eine Leitung 47 herangeführt. Insgesamt 17 300 Nm³/h werden in einem Kompressor 48 auf 1,1 bar verdichtet, durch die mittels heißem Rauchgas aufgeheizte, erste, d.h. obere Schüttung 5 bzw. 6 des jeweils anderen der beiden Regeneratoren 3, 4 geführt und über Leitung 49 mit einer Temperatur von 300 °C abgezogen. 14 239 Nm³/h werden über Leitung 50 als Verbrennungsluft dem Verbrennungsprozeß, 3 061 Nm³/h über Leitung 41 der Adsorptionskälteanlage 40 zugeführt, und nach Abkühlung auf ca. 190 °C dem über Leitung 20 abströmenden, gereinigten Rauchgas zugemischt.

Das Verfahrensschema der Figur 2 beschränkt sich auf eine besondere Ausführungsform des Regeneratorteils einer Anlage zur Durchführung des erfindungsgemäßen Verfahrens.

Es sind im wesentlichen drei Regeneratoren 86, 54, 55 dargestellt, wobei der Regenerator 86 dem oberen, die Regeneratoren 54 und 55 dem unteren Temperaturbereich des Wärmeaustausches zugeordnet sind. Alle dargestellten Regeneratoren sind mit je zwei Schüttungen 52, 53 bzw. 56, 57 und 58, 59 versehen, die im Falle des Regenerators 86 durch eine feste Trennwand 85 voneinander getrennt sind, während im Falle der Regeneratoren 54 und 55 keine solche Trennwand existiert. Die Schüttungen des Regenerators 86 dienen außer zur Vorkühlung des durch eine Leitung 1 herangeführten, zu reinigenden heißen Rauchgases noch zur Abtrennung der aus Wasserdampf und Schwefeltrioxid gebildeten Schwefelsäure durch Auskondensieren und Rücksublimation in die anzuwärmende Luft.

Das durch Leitung 1 herangeführte heiße Rauchgas gelangt durch ein geöffnetes Ventil 61 in den die Schüttung 52 enthaltenden Halbraum des Regenerators 86. Das Rauchgas wird dort vorgekühlt und verläßt den Regenerator durch eine Leitung 64, um durch ein geöffnetes Ventil 63 zum Verdichter 60 zu gelangen, der beispielsweise ein Gebläse sein kann. Die in der Figur dargestellten Ventile 62, 70, 66, 65 sowie 84 sind geschlossen. Während dessen dient die im anderen Halbraum des Regenerators 86 befindliche Schüttung 53, die zuvor durch heißes Rauchgas aufgeheizt wurde, zum Erwärmen von durch eine Leitung 47 herangeführter, in einem Verdichter 48 verdichteter Luft. Diese gelangt zunächst über eine Leitung 68 und ein geöffnetes Ventil 67 in den entsprechenden Halbraum und wird nach Durchströmen der Schüttung 53 in erhitztem Zustand über ein geöffnetes Ventil 69 und eine Leitung 49 abgeführt. Sie dient dann, wie bereits im Zusammenhang mit Figur 1 geschildert, teilweise als Verbrennungsluft und teilweise als Heizmedium für die Absorptionskälteanlage.

Das vorgekühlte, vorgereinigte Rauchgas gelangt nach Verdichtung im Verdichter 60 durch eine Leitung 71 und ein geöffnetes Ventil 72 in den Innenraum des Regenerators 54, und zwar zwischen die dort angeordneten beiden Schüttungen 56 und 57. Diese Schüttungen werden unter weiterer Abkühlung des Rauchgases und Auskondensieren höhersiedender Bestandteile, wie insbesondere Wasserdampf, in entgegengesetzter Richtung jeweils zu den Enden des Regenerators hin durchströmt, wobei sich die Schüttungen entsprechend erwärmen. Das so endgültig abgekühlte Rauchgas gelangt durch geöffnete Ventile 74 und 75 in eine Leitung 11, die zur anschließenden Tieftemperaturwäsche zum Zwecke der Schwefeldioxidabtrennung führt. Durch eine Leitung 16 wird in der Tieftemperaturwäsche gereinigtes, kaltes Rauchgas herangeführt, um durch geöffnete Ventile 78 und 79 in den Regenerator 55 zu gelangen und dort die beiden zuvor erwärmten Schüttungen 58 und 59 von den Regeneratorenden zur Mitte hin zu durchströmen. Das so rückgewärmte Rauchgas verläßt den Regenerator 55 in der Mitte und gelangt zusammen mit rücksublimiertem Wasserdampf über ein geöffnetes Ventil 82 in eine Leitung 20, die zum Kamin führt, über den das gereinigte Rauchgas abgeblasen werden kann. In der dargestellten Schaltperiode sind die Ventile 83, 80, 81, 77, 76 und 73 geschlossen.

Die Schüttungen des Regenerators 86 werden periodisch zwischen dem heißen Rauchgas und der zu erwärmenden Luft umgeschaltet. Dies geschieht mittels der Ventile 61, 62, 63 und 65 sowie 66, 67, 69 und 70. Die Strömungsrichtung wechselt von Periode zu Periode. Beide Schüttungen werden jedoch immer in derselben Richtung durchströmt.

Das Verfahrensschema der Figur 2 beschränkt sich auf eine besondere Ausführungsform des Regeneratorteils einer Anlage zur Durchführung des erfindungsgemäßen Verfahrens. Es sind im wesentlichen drei Regeneratoren 51, 54, 55 dargestellt, wobei der Regenerator 51 dem oberen, die Regeneratoren 54 und 55 dem unteren Temperaturbereich des Wärmeaustausches zugeordnet sind. Alle dargestellten Regeneratoren sind mit je zwei Schüttungen 52, 53 bzw. 56, 57 und 58, 59 versehen, die im Falle des Regenerators 51 durch eine feste Trennwand 85 voneinander getrennt sind, während im Falle der Regeneratoren 54 und 55 keine solche Trennwand existiert. Die Schüttungen des Regenerators 51 dienen außer zur Vorkühlung des durch eine Leitung 1 herangeführten, zu reinigenden heißen Rauchgases noch zur Abtrennung höhersiedender Verunreinigungen wie Wasserdampf und Schwefeltrioxid unter Bildung von Schwefelsäure aus kondensierendem Wasserdampf und sich darin lösendem Schwefeltrioxid.

Das durch Leitung 1 herangeführte heiße Rauchgas gelangt durch ein geöffnetes Ventil 61 in den die Schüttung 52 enthaltenden Halbraum des Regenerators 51. Das Rauchgas wird dort vorgekühlt und verläßt den Regenerator durch eine Leitung 64, um durch ein geöffnetes. Ventil 63 zum Verdichter 60 zu gelangen, der beispielsweise ein Gebläse sein kann. Die in der Figur dargestellten Ventile 62, 70, 66, 65 sowie 84 sind geschlossen. Während dessen dient die im anderen Halbraum des Regenerators 51 befindliche Schüttung 53, die zuvor durch heißes Rauchgas aufgeheizt wurde, zum Erwärmen von durch eine Leitung 47 herangeführter, in einem Verdichter 48 verdichteter Luft. Diese gelangt zunächst über eine Leitung 68 und ein geöffnetes Ventil 67 in den entsprechenden Halbraum und wird nach Durchströmen der Schüttung 53 in erhitztem Zustand über ein geöffnetes Ventil 69 und eine Leitung 49 abgeführt. Sie dient dann, wie bereits im Zusammenhang mit Figur 1 geschildert, teilweise als Verbrennungsluft und teilweise als Heizmedium für die Absorptionskälteanlage.

Das vorgekühlte, vorgereinigte Rauchgas gelangt nach Verdichtung im Verdichter 60 durch eine Leitung 71 und ein geöffnetes Ventil 72 in den Innenraum des Regenerators 54, und zwar zwischen die dort angeordneten beiden Schüttungen 56 und 57. Diese Schüttungen werden unter weiterer Abkühlung des Rauchgases in entgegengesetzter Richtung jeweils zu den Enden des Regenerators hin durchströmt, wobei sich die Schüttungen entsprechend erwärmen. Das so endgültig abgekühlte Rauchgas gelangt durch geöffnete Ventile 74 und 75 in eine Leitung 11, die zur anschließenden Tieftemperaturwäsche zum Zwecke der Schwefeldioxidabtrennung führt. Durch eine Leitung 16 wird in der Tieftemperaturwäsche gereinigtes, kaltes Rauchgas herangeführt, um durch geöffnete Ventile 78 und 79 in den Regenerator 55 zu gelangen und dort die beiden zuvor erwärmten Schüttungen 58 und 59 von den Regeneratorenden zur Mitte hin zu durchströmen. Das so rückgewärmte Rauchgas verläßt den Regenerator 55 in der Mitte und gelangt über ein geöffnetes Ventil 82 in eine Leitung 20, die zum Kamin führt, über den das gereinigte Rauchgas abgeblasen werden kann. In der dargestellten Schaltperiode sind die Ventile 83, 80, 81, 77, 76 und 73 geschlossen.

Die Schüttungen des Generators 51 werden periodisch zwischen dem heißen Rauchgas und der zu erwärmenden Luft umgeschaltet. Dies geschieht mittels der Ventile 61, 62, 63 und 65 sowie 66, 67, 69 und 70. Die Strömungsrichtung wechselt von Periode zu Periode. Beide Schüttungen werden jedoch immer in derselben Richtung durchströmt.

Die beiden Regeneratoren 54 und 55 des zum unteren Temperaturbereich des Wärmeaustausches gehörenden Regeneratorpaares werden ebenfalls periodisch umgeschaltet, jedoch muß dies nicht im selben Rhythmus wie bei den Schüttungen des Regenerators 86 geschehen. Im Unterschied zum Regenerator 86 erfolgt im unteren Temperaturbereich die Umschaltung nicht zwischen den Schüttungen desselben Regenerators, sondern vielmehr zwischen den Regeneratoren selbst, so daß die beiden Schüttungen eines Schüttungspaares 56, 57 bzw. 58, 59 immer von demselben Medium durchströmt werden und derselben Schaltperiode angehören. Beim Umschalten werden im unteren Temperaturbereich anstelle der bicher offenen und nunmehr zu schließenden Ventile 72, 74, 75 sowie 78, 79 und 82 die bisher geschlossenen Ventile 73, 76, 77 sowie 80, 81 und 83 geöffnet.

Das Rauchgas wird durch Leitung 1 beispielsweise mit einer Temperatur von 150 °C herangeführt, in der jeweiligen Schüttung des Regenerators 86 auf ca. 50 °C vorgekühlt und im Verdichter 60 unter Erwärmung auf 90 °C von ca. Atmosphärendruck auf etwa 1,65 bar verdichtet. Die zu erwärmende Luft wird im Verdichter 48 auf beispielsweise 1,1 bar verdichtet und in der entsprechenden Schüttung des Regenerators 86 auf 140 °C erhitzt. Das über Leitung 20 abgeführte, durch den Kamin abzublasende gereinigte Rauchgas hat im geschilderten Falle eine Temperatur von etwa 85 °C.

Im Falle von Störungen in der Tieftemperaturwäsche kann der obere Temperatubereich des Wärmeaustausches vom unteren Temperaturbereich abgekoppelt werden. Zu diesem Zwecke wird bei geschlossenen Ventilen 82 und 83 das Ventil 84 geöffnet, so daß das vorgekühlte Rauchgas ohne weitere Kühlung abgeleitet werden kann, und zwar direkt in die Atmosphäre oder beispielsweise in eine Ersatzreinigungsanlage, die nicht so hohen Ansprüchen genügt wie die Tieftemperaturwäsche. Durch Schließen eines nicht dargestellten Ventiles am Eingang des Verdichters 60 kann auch dieser strömungsmäßig abgetrennt werden.

## Ansprüche

1. Verfahren zur Entfernung unerwünschter gasförmiger Bestandteile aus bei der Verbrennung kohlenstoffhaltiger Brennstoffe anfallenden Abgasen durch Wäsche mit einem physikalisch wirkenden Absorptionsmittel unterhalb von 0 °C, wobei das Absorptionsmittel nach der Aufnahme der gasförmigen Bestandteile einer Regenerierung unterzogen und in die Wäsche zurückgegeben wird, dadurch gekennzeichnet, daß die Abgase aus der Verbrennung im heißen Zustand vor Einführung in die Wäsche in Wärmetauscher (3, 4) eingeleitet und im indirekten Wärmeaustausch in zwei aufeinanderfolgenden Stufen mit anzuwärmenden Gasströmen abgekühlt werden, wobei im oberen Temperaturbereich (5, 6) des Wärmeaustausches als anzuwärmende Gasströme bei der Verbrennung benötigte Verbrennungsluft (50) sowie ein zusätzlicher Luftstrom verwendet werden, der nach seiner Erwärmung als Heizgas (41) zum Betreiben einer Absorptionskälteanlage (40), mit der der Kältebedarf der Wäsche gedeckt wird, genutzt wird.

2. Verfahren nach Anspruch 1, dadurch gekennzeichnet, daß im unteren Temperaturbereich (7, 8) des Wärmeaustausches als anzuwärmender Gasstrom das kalte, in der Wäsche gereinigte Abgas (16) verwendet wird.

3. Verfahren nach Anspruch 1 oder 2, dadurch gekennzeichnet, daß die Absorptionskälteanlage mit einem Ammoniak-Wasser-Gemisch betrieben und das als Kältemittel dienende Ammoniak zur Kühlung des regenerierten Absorptionsmittels sowie des vom Kopf der Waschsäule (12) abströmenden, gereinigten Abgases verwendet und dabei verdampft wird, oder daß zusätzlich zur Absorptionskälteanlage (40) ein, beispielsweise mit Ammoniak betriebener Wärmepumpenkreislauf (42, 46, 43) vorgesehen ist, der den an der Wäsche beteiligten Fluiden Wärme entzieht und an das Kältemittel der Absorptionskälteanlage überträgt.

4. Verfahren nach Anspruch 3, dadurch gekennzeichnet, daß das gegen verdampfendes Ammoniak der Absorptionskälteanlage (40) verflüssigte Ammoniak des Wärmepumpenkreislaufs (42, 46, 43) nach, gegebenenfalls auf unteratmosphärischen Druck erfolgender Entspannung im Wärmeaustausch mit abzukühlendem, der Wäsche zuzuführendem Absorptionsmittel (39) sowie vom Kopf der Wäsche abzuziehendem gereinigtem Abgas (17) verdampft wird.

5. Verfahren nach einem der Ansprüche 1 bis 4, wobei der zur Abkühlung des Abgases dienende Wärmeaustausch in umschaltbaren Regeneratoren stattfindet und für den oberen sowie den daran anschließenden unteren Temperaturbereich des Wärmeaustausches jeweils gesonderte Regeneratoren (86 ; 54, 55) vorgesehen sind.

6. Verfahren nach Anspruch 5, dadurch gekennzeichnet, daß jeder dem oberen Temperaturbereich zugeordnete Regenerator (86) zwei in axialer Richtung hintereinander angeordnete, durch eine Trennwand (85) voneinander getrennte Schüttungen (52, 53) aufweist, deren eine jeweils von dem abzukühlenden Abgas und deren andere gleichzeitig von der anzuwärmenden Luft durchströmt wird, und die Schüttungen periodisch zwischen dem Abgas und der Luft umgeschaltet werden und/oder für den unteren Temperaturbereich Paare von jeweils axial hintereinander angeordnete Schüttungen (56, 57 ; 58, 59) aufweisenden, periodisch zwischen den abzukühlenden und den anzuwärmenden Gasströmen umzuschaltenden Regeneratoren (54, 55) verwendet werden, wobei die beiden Schüttungen eines jeden Regenerators in jeweils entgegengesetzten Richtungen entweder von der Mitte her zu den Enden hin oder umgekehrt durchströmt werden.

7. Verfahren nach Anspruch 5 oder 6 zur Entfernung von Schwefeldioxid aus feuchten Rauchgasen, dadurch gekennzeichnet, daß die im oberen Temperaturbereich des Wärmeaustausches vorgekühlten Rauchgase vor Eintritt in den unteren Temperaturbereich einer Verdichtung (60) unterzogen werden.

8. Verfahren nach einem der Ansprüche 1 bis 7 zur Entfernung von Schwefeldioxid aus Rauchgasen, dadurch gekennzeichnet, daß als Absorptionsmittel Dimethylformamid verwendet wird.

9. Verfahren nach Anspruch 8, dadurch gekennzeichnet, daß die Regenerierung des Absorptionsmittels in zwei Stufen (25, 32) erfolgt, wobei in der ersten Stufe mitgelöstes Kohlendioxid, beispielsweise mit Hilfe von Strippgas (26), und in der zweiten Stufe das Schwefeldioxid, beispielsweise bei unteratmosphärischem Druck und unter Wärmezufuhr (33), ausgetrieben wird.

10. Verfahren nach Anspruch 8 oder 9, dadurch gekennzeichnet, daß die aus restlichem oder durch Oxidation von Schwefeldioxid, beispielsweise durch zusätzlich vorhandenes Stickstoffdioxid, entstandenem Schwefeltrioxid und Restfeuchtigkeit gebildete Schwefelsäure vom regenerierten Absorptionsmittel abgetrennt wird (37).

11. Verfahren nach Anspruch 10, dadurch gekennzeichnet, daß die Schwefelsäure durch Neutralisation, beispielsweise mit Ammoniak oder Kalziumoxid, entfernt oder das Dimethylformamid destillativ von der Schwefelsäure abgetrennt wird.

12. Verfahren nach Anspruch 11, dadurch gekennzeichnet, daß im Falle der destillativen Abtrennung restliches Dimethylformamid aus der destillativ aufkonzentrierten Schwefelsäure durch Extraktion mit einem mit Schwefelsäure nicht mischbaren Lösungsmittel, beispielsweise einem polaren organischen Lösungsmittel, wie Chloroform, Toluol oder Benzol, entfernt wird, wobei die Extraktion in Anwesenheit von Wasser durchgeführt werden kann.

13. Verfahren nach einem der Ansprüche 8 bis 12, dadurch gekennzeichnet, daß das aus dem Absorptionsmittel ausgetriebene Schwefeldioxid anschließend verflüssigt oder mit Sauerstoff, beispielsweise Luftsauerstoff, oxidiert und in Wasser oder verdünnter Schwefelsäure gelöst wird.

## Claims

1. A process for the removal of unrequired gaseous components from waste gas which are produced during the combustion of carboniferous fuels by washing with a physically acting absorbent at below ·0 °C, wherein after the absorption of the gaseous components, the absorbent is subjected to regeneration and recycled to the washing step, characterised in that, prior to their introduction into the washing step, the waste gases from the combustion are fed in the hot state into heat exchangers (3, 4) and are cooled in indirect heat exchange in two consecutive stages with gas streams to be heated, and wherein in the upper temperature range (5, 6) of the heat exchange, combustion air (50) required for the combustion of the fuel and an additional air stream are used as the gas streams to be heated, the additional air stream, after being heated, being used as a heating gas (41) for operating an absorption refrigerating unit (40) by means of which the cold requirements of the washing step are met.

2. A process as claimed in Claim 1, characterised in that the cold waste gas (16) which has been purified in the washing step, is used as a gas stream to be heated in the lower temperature region (7, 8) of the heat exchange step.

3. A process as claimed in Claim 1 or Claim 2, characterised in that the absorption refrigerating unit is operated with an ammonia-water mixture and the ammonia serving as the refrigerant is used for cooling both the regenerated absorbent and the purified waste gas, which leaves the head of the washing column (12), and is thereby vaporised ; or that, in addition to the absorption refrigerating unit (40), there is provided a heat pump cycle (42, 46, 43) which is operated using ammonia and which extracts heat from the fluids taking part in the washing step and transfers the heat to the refrigerant of the absorption refrigerating unit.

4. A process as claimed in Claim 3, characterised in that the liquefied ammonia of the heat pump cycle (42, 46, 43) which is liquefied against the evaporating ammonia of the absorption refrigerating unit (40), is evaporated after expansion, if necessary to a subatmospheric pressure, in heat exchange with the absorbent (39) which is to be cooled and introduced into the washing step, and with the purified waste gas (17) leaving the head of the washing step.

5. A process as claimed in one of Claims 1 to 4, wherein the heat exchange serving to cool the waste gases, takes place in switchable regenerators, and wherein separate regenerators (86 ; 54, 55) are respectively provided for the upper and the subsequent lower temperature regions of the heat exchange step.

6. A process as claimed in Claim 5, characterised in that each regenerator (86) which is assigned to the upper temperature region has two fillings (52, 53) which are consecutively arranged in the axial direction and are separated from one another by a partition wall (85), one of which fillings is traversed by the waste gas which is to be cooled and the other one of which is simultaneously traversed by the air which is to be heated, and that the fillings are periodically changed over between the waste gas and the air, and/or that pairs of regenerators (54, 55) which each have fillings (56, 57 ; 48, 59) axially connected in series and are to be periodically changed over between the gas streams to be cooled and those to be heated, are used for the lower temperature range, the two fillings of each regenerator being traversed in opposite directions, either from the centre towards the ends or vice versa.

7. A process as claimed in Claim 5 or Claim 6, for removing sulphur dioxide from moist flue gases, characterised in that, prior to introduction into the lower temperature region, the flue gases which are precooled in the upper temperature region of the heat exchange are subjected to compression (60).

8. A process as claimed in one of Claims 1 to 7 for removing sulphur dioxide from flue gases, characterised in that dimethyl formamide is used as absorbent.

9. A process as claimed in Claim 8, characterised in that the regeneration of the absorbent is effected in two stages (25, 32), in which, in the first stage, dissolved carbon dioxide is expelled, for example, with the aid of stripping gas (26), and in the second stage, the sulphur dioxide is expelled, for example, at sub-atmospheric pressure and by the supply of heat (33).

10. A process as claimed in Claim 8 or Claim 9, characterised in that the sulphuric acid which is formed from residual sulphur trioxide or from sulphur trioxide produced by the oxidation of sulphur dioxide, for example, by nitrogen dioxide also present, and residual moisture, is separated from the regenerated absorbent (37).

11. A process as claimed in Claim 10, characterised in that the sulphuric acid is removed by neutralization, for example, by means of ammonia or calcium oxide, or the dimethyl formamide is separated from the sulphuric acid by distillation.

12. A process as claimed in Claim 11, characterised in that, in the case of separation by distillation, residual dimethyl formamide is removed from the sulphuric acid, which is concentrated by the distillation, by extraction with a solvent which is immiscible with sulphuric acid, for example, a polar organic solvent such as chloroform, toluene or benzene, whereby the extraction can be carried out in the presence of water.

13. A process as claimed in one of Claims 8 to 12, characterised in that the sulphur dioxide expelled from the absorbent is subsequently liquefied or oxidized with oxygen, for example, atmospheric oxygen, and dissolved in water or dilute sulphuric acid.

## Revendications

1. Procédé d'élimination de constituants gazeux indésirables des gaz résiduaires produits lors de la combustion de combustibles contenant du carbone, dans lequel on effectue un lavage au-dessous de 0 °C avec un agent d'absorption à action physique qui après le captage des constituants gazeux, est soumis à une régénération puis renvoyé au lavage, caractérisé en ce que, préalablement audit lavage, les gaz résiduaires sont introduits à l'état chaud dans l'échangeur de chaleur (3, 4) et subissent un échange de chaleur indirect à deux étages successifs avec des courants gazeux à chauffer, et en ce que dans la zone de température élevée (5, 6) de l'échangeur de chaleur, on utilise comme courants gazeux à chauffer, de l'air comburant (50) nécessaire pour la combustion ainsi qu'un courant d'air supplémentaire qui, après son chauffage est utilisé comme gaz chaud (41) pour l'alimentation d'une installation de réfrigération à absorption 40 et couvrir le besoin en froid du lavage.

2. Procédé suivant la revendication 1, caractérisé en ce que, dans l'intervalle de température inférieur (7, 8) de l'échange de chaleur on utilise comme courant gazeux à chauffer le gaz résiduaire (16) froid, épuré dans le lavage.

3. Procédé suivant la revendication 1 ou 2, caractérisé en ce que l'installation de réfrigération à absorption est alimentée par un mélange ammoniac-eau et en ce que l'ammoniac servant d'agent réfrigérant est utilisé pour le refroidissement de l'agent d'absorption régénéré ainsi que du gaz perdu épuré, sortant de la tête de la colonne de lavage et est vaporisé dans ce processus, ou en ce que, en supplément de l'installation de réfrigération à absorption (40), il est prévu un circuit de pompe à chaleur (42, 46, 43) fonctionnant par exemple à l'ammoniac, qui prélève de la chaleur sur les fluides participant au lavage et la transmet à l'agent réfrigérant de l'installation de réfrigération à absorption.

4. Procédé suivant la revendication 3, caractérisé en ce que l'ammoniac du circuit de pompe à chaleur (3, 42, 45, 43) liquéfié par échange de chaleur avec l'ammoniac de l'installation de réfrigération à absorption (40) qui est vaporisé, est vaporisé, après une détente poursuivie éventuellement jusqu'à une pression inférieure à la pression atmosphérique, par échange de chaleur avec de l'agent d'absorption (30) à refroidir et à envoyer au lavage, ainsi qu'avec du gaz résiduaire épuré (17) qui doit être extrait de la tête de lavage.

5. Procédé suivant l'une des revendications 1 à 4, caractérisé en ce que l'échange de chaleur servant pour le refroidissement du gaz résiduaire se produit dans des régénérateurs commutables et en ce qu'il est prévu des régénérateurs séparés (86 ; 54, 55) pour l'intervalle de température élevé de l'échange de chaleur et pour l'intervalle de température inférieur de l'échange de chaleur qui fait suite au premier.

6. Procédé suivant la revendication 5, caractérisé en ce que chaque régénérateur (86) affecté à l'intervalle de température supérieur comprend deux garnissages (52, 53) disposés l'un à la suite de l'autre dans la direction axiale, séparés l'un de l'autre par une cloison (85), dont l'un est parcouru par le gaz résiduaire à refroidir et l'autre est parcouru simultanément par l'air à chauffer, ces garnissages étant périodiquement commutés entre le gaz perdu et l'air, et/ou en ce qu'il est prévu pour l'intervalle de température inférieur, des régénérateurs (54, 55) appelés à être commutés périodiquement entre les courants gazeux à refroidir et les courants gazeux à chauffer, et qui présentent chacun une paire de garnissages (56, 57 ; 58, 59) disposés axialement l'un à la suite de l'autre, les deux garnissages de chaque régénérateur étant parcourus dans des sens opposés, soit du milieu vers les extrémités, soit inversement.

7. Procédé suivant la revendication 5 ou 6, pour l'élimination du bioxyde de soufre de gaz de fumées humides, caractérisé en ce que les gaz de fumées pré-refroidis dans l'intervalle de température élevé de l'échange de chaleur sont soumis à une compression (60) avant l'entrée dans l'intervalle de température inférieur.

8. Procédé suivant l'une des revendications 1 à 7, pour l'élimination du bioxyde de soufre de gaz de fumée, caractérisé en ce qu'on utilise le diméthylformamide comme agent d'absorption.

9. Procédé suivant la revendication 8, caractérisé en ce que la régénération de l'agent d'absorption s'effectue en deux étages (25, 32), le bioxyde de carbone co-dissous étant séparé dans le premier étage, par exemple à l'aide de gaz extracteur (26) et le bioxyde de soufre étant séparé dans le deuxième étage, par exemple sous une pression inférieure à la pression atmosphérique et avec apport de chaleur (33).

10. Procédé suivant la revendication 8 ou 9, caractérisé en ce qu'on sépare (en 37) de l'agent d'absorption régénéré l'acide sulfurique formé à partir du trioxyde de soufre résiduel ou formé par oxydation du bioxyde de soufre, par exemple par le bioxyde d'azote présent en supplément, et à partir d'humidité résiduelle.

11. Procédé suivant la revendication 10, caractérisé en ce qu'on élimine l'acide sulfurique par neutralisation, par exemple à l'aide d'ammoniac ou d'oxyde de calcium et qu'on sépare le diméthylformamide de l'acide sulfurique par distillation.

12. Procédé suivant la revendication 11, caractérisé en ce que, dans le cas de la séparation par distillation, le diméthylformamide résiduel est éliminé de l'acide sulfurique concentré par distillation, par extraction au moyen d'un solvant non miscible avec l'acide sulfurique, par exemple d'un solvant organique polaire tel que le chloroforme, le toluène ou le benzène, l'extraction pouvant s'effectuer en présence d'eau.

13. Procédé suivant l'une des revendications 8 à 12, caractérisé en ce qu'ensuite, on liquéfie le bioxyde de soufre éliminé de l'agent d'absorption et on l'oxyde à l'aide d'oxygène, par exemple d'oxygène de l'air et on le dissout dans de l'eau ou dans de l'acide sulfurique dilué.

Fig.1

0 011 228

Fig. 2